# EUROPEAN PATENT SPECIFICATION

(11) **EP 4 601 760 B1**
(45) Date of publication and mention of the grant of the patent: **02.12.2026**
(21) Application number: 23776477.4
(22) Date of filing: 20.09.2023
(51) Int. Cl.: B01D 25/00, G01N 21/954

(54) **DEVICE FOR THE OPTICAL IMAGING OF FILTERING SEPTA AND FILTRATION APPARATUS EQUIPPED WITH IT**
VORRICHTUNG ZUR OPTISCHEN ABBILDUNG VON FILTERNDEN SEPTEN UND DAMIT AUSGESTATTETE FILTERVORRICHTUNG
DISPOSITIF D'IMAGERIE OPTIQUE À CLOISONS FILTRANTES ET APPAREIL DE FILTRATION ÉQUIPÉ DE CELUI-CI

(30) Priority: 12.10.2022 IT 202200021021
(43) Date of publication of application: 20.08.2025
(73) Proprietor: Diemme Filtration S.r.l., 48022 Lugo (RA) (IT)
(72) Inventor: NEGRINI, Pietro, 40026 Imola (BO) (IT); BASSI, Andrea, 48018 Faenza (RA) (IT); COLLINI, Davide, 48022 Lugo (RA) (IT); DARDI, Roberto, 48024 Massa Lombarda (RA) (IT)
(74) Representative: AVERA-IP SRL
(86) International application number: PCT/IB2023/059291
(87) International publication number: WO 2024/079554

(56) References cited:
- EP-A2- 0 237 869
- WO-A1-2021/034611
- WO-A1-2022/157608
- JP-A- 2016 099 135
- JP-A- S63 232 810

## Description

### Technical Field

The present invention relates to a device for the optical acquisition of images of filtering septa and a filtration apparatus, in particular but not exclusively a filter press, provided with said optical acquisition device.

### Background

As is well known, a filter press is a filtration apparatus that is commonly used to filter liquid substances containing suspended solids (known as solid-liquid suspensions), typically sludge that may originate from both civil and industrial wastewater treatment processes or from numerous other production processes, e.g. but not exclusively chemical/pharmaceutical or mining.

For that purpose, a filter press generally comprises an array of containment plates, which are arranged in sequence along a predetermined horizontal direction.

Between each pair of containment plates there are two mutually facing filtering septa, typically two portions of filtering cloth, each of which is adapted to cover one of the main faces of the containment plate adjacent thereto.

Each pair of containment plates is movable between a closed and an open configuration. In the closed configuration, the containment plates are clamped in a packet against the filtering septa interposed between them, thus delimiting a filtration chamber.

In the open configuration, the containment plates are spaced apart, separating the corresponding filtering septa and opening the filtration chamber laterally.

Through a suitable inlet hydraulic circuit, the sludge to be filtered is fed into the filtration chambers when all the containment plates are in a closed configuration.

In this way, the solid fraction of the sludge remains confined within the filtration chambers, where it forms a compact residue, while the liquid fraction passes through the filtering septa to a hydraulic outlet circuit, through which it can be discharged or collected.

At the end of this filtration cycle, the pairs of containment plates are brought, either simultaneously or one at a time, into an open configuration, so that the solid deposit can fall outside the filtration chambers.

Since some of the solid material may foul the filtering septa that delimit the filtration chamber, said filtering septa may be periodically subjected to a washing step using high-pressure water jets.

This washing phase can be carried out in an automated manner with the aid of a robot, which generally comprises a trolley adapted to move along the alignment direction of the containment plates, and a bar, moving transversely on board the trolley, which is designed to insert itself and slide between each pair of containment plates in open configuration and therefore between the corresponding filtering septa.

Dispensing nozzles are installed on this bar which, connected to a suitable water supply circuit, are able to deliver high-pressure water jets against both filtering septa, cleaning the solid residues off them.

Apart from these regular cleaning operations, the filtering septa are subject to progressive wear and tear and must therefore be replaced regularly.

Currently, this replacement can be carried out according to two different approaches.

The first approach follows the logic of so-called "preventive maintenance" and consists of the preventive replacement of all the filtering septa after a certain number of filtration cycles.

For this approach to be effective, however, the number of filtration cycles leading to the replacement of the filtering septa must be sufficiently low so that none of them breaks before replacement, which obviously means that some filtering septa may be replaced prematurely, with obvious waste of resources and increased costs.

Furthermore, the determination of this number of filtration cycles can only be made on the basis of an average wear pattern in the filtering septa and cannot take into account accidental events that could cause unexpected damage.

In fact, a filtering septum can be damaged not only by wear and tear but also by other factors, such as the presence of large particles (a few millimetres) that impact violently against the filtering septum due to the high flow rate/speed at which the sludge is fed, causing it to break prematurely.

To try to overcome these drawbacks, the second approach that has been proposed is one that follows the logic of so-called "just-in-time or event-based maintenance".

It consists of replacing one or more filtering septa only when a malfunction of the filter press is detected.

In particular, a turbidity meter is generally used to measure the turbidity of the filtered liquid leaving the filter press through the hydraulic outlet circuit.

If the turbidity measured is above a predefined threshold value, this means that part of the solid phase contained in the sludge has passed through a breakage that has formed in at least one filtering septum.

When this occurs, an operator will manually inspect all the filtering septa installed on the filter press to identify the one(s) where the breakage has effectively occurred, which will therefore be replaced.

However, it is clear that this second approach can lead to long production downtime and a lot of work for the operators who have to check the filtering septa.

As well as being laborious, this activity can also be difficult to carry out, since, in some types of filter press, the space available between two containment plates in the open configuration can be rather narrow, making it very difficult and sometimes even impossible to inspect the filtering septa accurately.

In order to overcome or at least mitigate this drawback, the solution was proposed to equip the washing robot bar with a plurality of cameras which, thanks to the movement of the bar, are effectively able to scan the filtering septa.

In this way, it is advantageous to be able to check the state of use of the filtering septa, without the need for an operator to physically enter between the containment plates of the filter press, in a simpler and quicker way with respect to the known technique and in a generally more effective way, since the movement of the bar can allow the camera to take images of each zone of the filtering septum.

It is precisely because of this simplicity and speed of scanning that the filtering septa can also be checked more frequently, e.g. during or after each washing operation, and not just when a malfunction is detected.

However, the space available between two containment plates in an open configuration is generally very limited, which poses significant constraints and technical difficulties with respect to the use of such cameras.

In fact, when inserted between the two containment plates, these cameras are very close to the filtering septa and, although they may be equipped with wide-angle systems, each of them is only able to frame rather limited areas.

If we add to this the fact that filtering septa are normally quite large, it is easy to understand how, in order to reconstruct complete images of each filtering septum, it is necessary to equip the washing robot bar with a very large number of cameras.

This number doubles due to the fact that it is necessary to set up a first set of cameras facing in one direction, to scan one filtering septum, and a second set of cameras facing in the opposite direction, to scan the other filtering septum.

This large number of cameras inevitably complicates the construction layout of the system and leads to a not inconsiderable increase in costs.

However, this drawback does not depend on the installation of the cameras on the washing robot bar, but would also occur identically if the cameras were installed on a dedicated robot.

Moreover, this is a drawback that does not only affect filter presses but, more generally, any filtration equipment where the filtering septa are only accessible through narrow spaces.

Prior-art documents that illustrate the exposed situation - WO2022157608A1, EP0237869A2, JPS63232810A - disclose filtration or filter-press systems. Solutions from other technical fields are given in JP2016099135A and WO2021034611A1.

### Disclosure of the invention

In light of the foregoing, an object of the present invention is to make available a filtration apparatus comprising at least one filtering septum and at least a device for the optical acquisition of images of filtering septa, e.g. but not exclusively for filter presses, which can be placed in confined spaces without causing the aforementioned inconveniences or at least mitigating them significantly, according to claim 1.

Another aim of the present invention is that of reaching the aforesaid objective within the context of a simple, rational and relatively cheap solution.

Such aims are achieved by the characteristics of the invention reported in the independent claim. The dependent claims outline preferred and/or particularly advantageous aspects of the invention which however are not strictly required for the implementation thereof.

Thanks to this solution, the acquisition of images does not take place directly, as in the known technique, but through the reflective surface of the mirror, which can therefore be kept very close to the filtering septum to be scanned but far enough away from the camera to allow the latter to frame an elevated zone or area, while remaining confined in narrow spaces and, for example, oriented with its optical axis, no longer orthogonal to the filtering septa, but substantially parallel thereto.

According to one aspect of the invention, the reflective surface of the mirror can be chosen from the group consisting of: a flat reflective surface, a concave reflective surface and a convex reflective surface.

These types of reflective surfaces are particularly suitable for effective framing of the filtering septa.

Another aspect of the invention is that the reflective surface can extend, for example with a constant transverse profile, predominantly along a predetermined longitudinal direction of the mirror orthogonal to the optical axis of the camera.

In this way, the camera alone is capable of framing a rather large band of the filtering septum, at least in a direction parallel to the longitudinal direction of the mirror, thus allowing a smaller number of cameras to be used than in the known technique with the same overall size of the filtering septum.

According to another aspect of the invention, the camera can be chosen from the group consisting of: a matrix camera and a linear camera.

These types of cameras have the advantage of being relatively inexpensive, while still allowing images of filtering septa or portions thereof to be obtained with a high degree of resolution.

Another aspect of the invention is that the illuminating apparatus can be capable of emitting light with a wavelength between 10 nm (ultraviolet) and 1 mm (infrared).

Depending on the characteristics of the filtering septum and the camera, light with these wavelengths allows images to be acquired in which the most significant details of the filtering septum (e.g. possible abrasions, tears, etc.) are highlighted.

To further enhance image definition, the illuminating apparatus can be capable of emitting continuous or stroboscopic light.

According to a further aspect of the invention the illuminating apparatus may comprise one or more illuminators positioned between the mirror and the camera and/or one or more illuminators positioned on the opposite side of the mirror to the camera.

This arrangement of illuminators is particularly recommended in order to effectively illuminate the area of the filtering septum to be filmed by the camera.

Each of the aforementioned illuminators can either provide spot light or extend predominantly in a predetermined longitudinal direction orthogonal to the camera's optical axis, e.g. parallel to the longitudinal direction of the mirror.

In this way, the illuminator is able to effectively illuminate the entire area of the filtering septum that is imaged by the optical acquisition device.

Another aspect of the invention provides that the illuminating apparatus may further comprise one or more lenses for diffusing and/or focusing the light generated thereby.

This solution also has the advantage of improving the illumination of the filtering septum to increase image quality.

According to a possible embodiment of the invention, the mirror can be pivoted on the support frame by rotating about an axis of rotation orthogonal to the optical axis of the camera.

With this solution, the reflected optical axis produced by the mirror's reflective surface can be oriented in different ways, allowing the camera to take images of different areas of the filtering septum or different filtering septa.

For example, in the case of a filter press or other filtration equipment with opposing filtering septa, by appropriately orienting the mirror, a single camera can effectively capture images of both filtering septa.

Other embodiments of the invention provide that the camera can be oriented on the support frame by rotating about an axis of rotation orthogonal to the camera's optical axis. This solution, too, allows the reflected optical axis to be oriented as required.

For example, one possible embodiment involves both the mirror and the camera being orientable.

Another embodiment provides that on the support frame the following can be installed:
- a second mirror having a reflecting adapted to be intercepted by the optical axis of the camera at an angle of incidence different from the right angle, following a rotation of the latter about its axis of rotation, generating a second reflected optical axis directed from the opposite side to the reflected optical axis, and
- a second illuminating unit being provided to illuminate at least one point on the second reflected optical axis spaced from the reflecting surface of the second mirror.

In this way, by selectively directing the camera towards one or the other mirror, it is advantageously possible, in the case of a filter press or other filtration equipment with opposing filtering septa, to scan both filtering septa with a single camera.

A further embodiment provides that on the support frame the following can be installed:
- a second mirror with a reflective surface,
- a second camera with an optical axis adapted to intercept the reflective surface of the second mirror at an angle of incidence different from the right angle, generating a second reflected optical axis directed on the opposite side from the reflected optical axis,
- a second illuminating apparatus to illuminate at least one point on the second reflected optical axis spaced from the reflecting surface of the second mirror.

This solution has the advantage of allowing, for example in the case of a filter press or other filtration equipment with opposing filtering septa, the scanning of both filtering septa at the same time, each with a respective camera.

Another aspect of the invention is that the frame can be provided with panelling to define a closed casing containing said at least one mirror, at least one camera and at least one illuminating apparatus,
said casing comprising at least one slit positioned so as to be crossed by the reflected optical axis of the camera and the light generated by the illuminating apparatus. This casing has the advantage of protecting and ensuring the cleanliness of the active components of the optical acquisition device, in particular the camera, mirror and illuminating apparatus.

To further enhance this effect, one aspect of the invention provides that the slit may be closed by at least one protective glass pane, which may be arranged substantially orthogonal to the reflected optical axis.

The slit may be further closed by one or more additional protective glass panes, each of which is substantially orthogonal to an axis of emission of the light generated by the illuminating apparatus.

This solution has the advantage of preventing possible light reflection problems that might otherwise worsen the illumination of the filtering septum.

The present invention then makes available a filtration apparatus comprising at least one filtering septum and at least one optical acquisition device of the type outlined above arranged so that the reflected optical axis intersects said filtering septum.

Benefiting from the characteristics of the optical acquisition device, this filtration apparatus has the advantage of allowing efficient and relatively inexpensive monitoring of the filtering septa, even if they are located in confined spaces.

According to one aspect of the invention, this apparatus may comprise moving parts capable of moving said optical scanning device along at least one translation direction parallel to the filtering septum.

In this way, it is advantageously possible to progressively scan different areas of the filtering septum and then eventually reconstruct a complete image.

Especially in the case of particularly large filtering septa, however, it is possible to envisage the apparatus comprising a plurality of optical scanning devices placed side-by-side along a direction perpendicular to the optical axes of the respective cameras.

This modular solution has the advantage of allowing complete scanning by reducing the movements to be given to the scanning devices.

According to a particular embodiment, the filtration apparatus may comprise:
- a plurality of filtration chambers aligned along a predetermined longitudinal direction, each of which is delimited by two mutually facing filtering septa interposed between a pair of containment plates,
- a movement apparatus adapted to move each pair of containment plates along said longitudinal direction, between a closed configuration, in which the containment plates are clamped into a pack on the respective filtering septa closing the filtration chamber, and an open configuration, in which the containment plates are spaced apart so as to separate the respective filtering septa laterally opening the filtration chamber,
- an inlet hydraulic circuit adapted to feed a liquid to be filtered inside each filtration chamber, when all the pairs of containment plates are in the closed configuration, and
- an outlet hydraulic circuit adapted to discharge the filtered liquid leaving each filtration chamber through the respective filtering septa, when all the pairs of containment plates are in the closed configuration,
wherein said at least one optical scanning device is adapted to be interposed between each pair of containment plates in the open configuration.

This embodiment actually represents the application of the scanning device according to the invention to the specific but not exclusive case of a filter press, where its use is particularly advantageous.

In this context, the apparatus (the filter press) can particularly comprise:
- a trolley adapted to move along said longitudinal direction with respect to the containment plates, and
- a bar installed on the trolley and movable relative thereto in a transverse direction with respect to the longitudinal direction, in order to slide between the filtering septa interposed between each pair of containment plates in the open configuration,
wherein said at least one optical scanning device is installed on said bar.

This aspect of the invention provides a particularly efficient solution for moving the optical scanning device(s) between the filtering septa of the filter press.

### Brief description of the figures

Further features and advantages of the invention will be more apparent after reading the following description provided by way of a non-limiting example, with the aid of the accompanying drawings.
Figure 1 is a schematic perspective view of an optical acquisition device.
Figure 2 is a perspective view of the device of figure 1 observed from a different angle.
Figure 3 is the perspective view of figure 1 in which the infill panels have been removed to highlight the internal components.
Figure 4 is a side view of the device of figure 3, shown schematically interposed between two filtering septa.
Figures 5 and 6 correspond to figures 3 and 4 but refer to a second device.
Figures 7 and 8 correspond to figures 3 and 4 but refer to a device conforming to a third aspect.
Figures 9 and 10 correspond to figures 3 and 4 but refer to a device conforming to a fourth aspect.
Figures 11 and 12 correspond to figures 3 and 4 but refer to a device conforming to a fifth aspect.
Figure 13 schematically shows a detail of the device in the perspective of figure 4.
Figure 14 schematically shows a detail of the device in the perspective of figure 4 but according to a variant.
Figure 15 is a perspective view of an optical acquisition device system according to an embodiment of the invention and shown without infill panels.
Figure 16 is a variant of figure 15.
Figure 17 is an axonometric view of a filter press according to an embodiment of the present invention.
Figure 18 is a schematic section of a portion of the pack of containment plates of the filter press of figure 17, performed in a plane of vertical section and containing the longitudinal axis D.
Figure 19 is an exploded axonometric view of a containment plate belonging to the filter press of Figure 17 and the related filtering septa.
Figure 20 is an axonometric view of a washing robot belonging to the filter press of Figure 17 shown at a pair of consecutive containment plates and in an open configuration.
Figure 21 is an axonometric view of the washing robot of figure 20, observed from a different angle and equipped with an optical acquisition device according to the invention, in which one of the containment plates has been concealed to better illustrate certain details of the invention.

### Detailed description

The above figures show a device 100 for the optical imaging of filtering septa S.

The device 100 comprises a frame 105 in which various functional components are installed.

This frame 105 may have a substantially box-like conformation, that of a straight parallelepiped, which may have two prevailing dimensions, namely a width L and a height **H,** and a dimension reduced with respect to the previous ones that defines its thickness S.

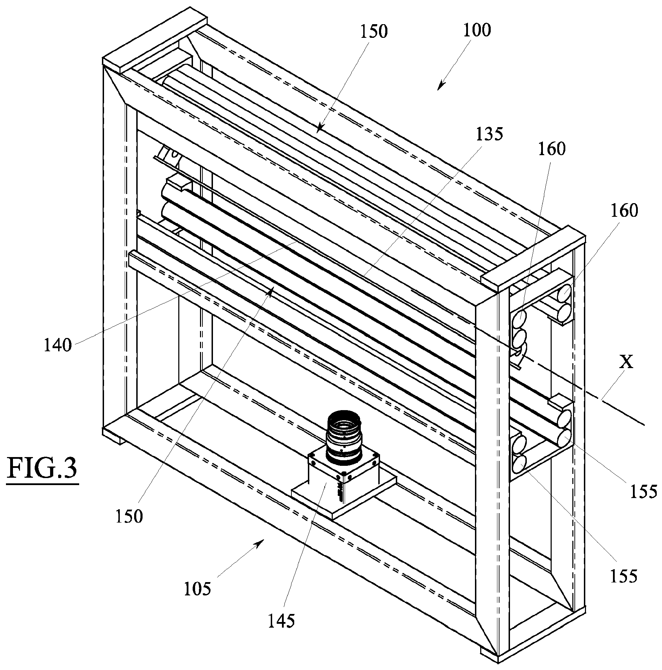

As illustrated, for example in figure 3, the frame 105 may comprise a plurality of bars that extend along its edges and are rigidly attached to each other, e.g. by welding, bolting or otherwise, so as to define an internal framework.

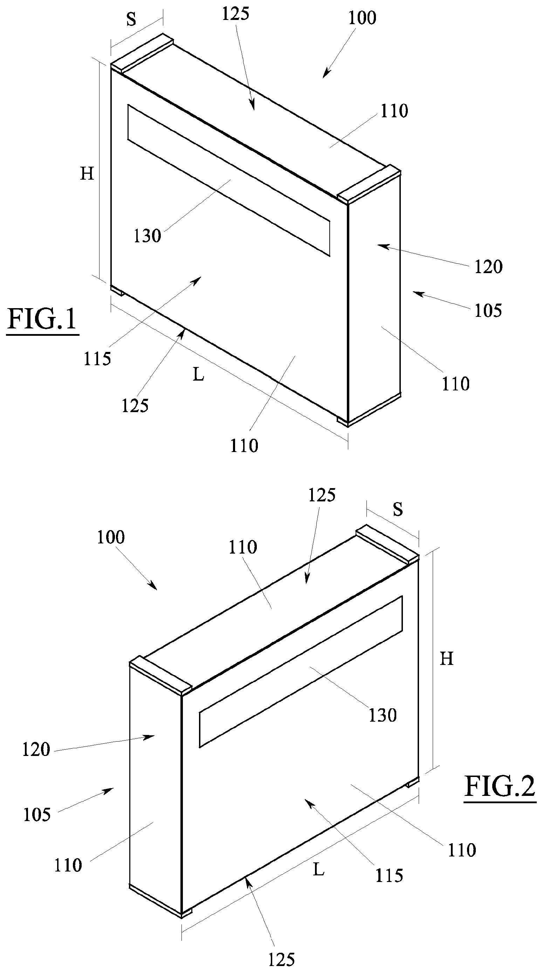

Infill panels 110 (visible in figures 1 and 2) can be attached to this internal frame, which are designed to close/define the side walls of the frame 105, giving it the conformation of a closed casing, i.e. a cabinet, internally hollow.

Specifically, this casing may comprise two major, i.e., larger side walls 115, which are mutually opposed along the direction of thickness S, and four minor, i.e., smaller side walls, of which two first side walls 120 are mutually opposed along the direction of width L, and two second side walls 125 are mutually opposed along the direction of height H. At least one, but more preferably two, of said panels 110, e.g. those defining the major side walls 115, may be individually provided with a slit 130 capable of optically connecting the internal volume with the outside.

Each slit 130 may have a substantially rectangular shape extending predominantly in a direction parallel to the width L of the frame 105, for example for almost the entire distance separating the first side walls 120, while having a smaller extension in the direction of the height H.

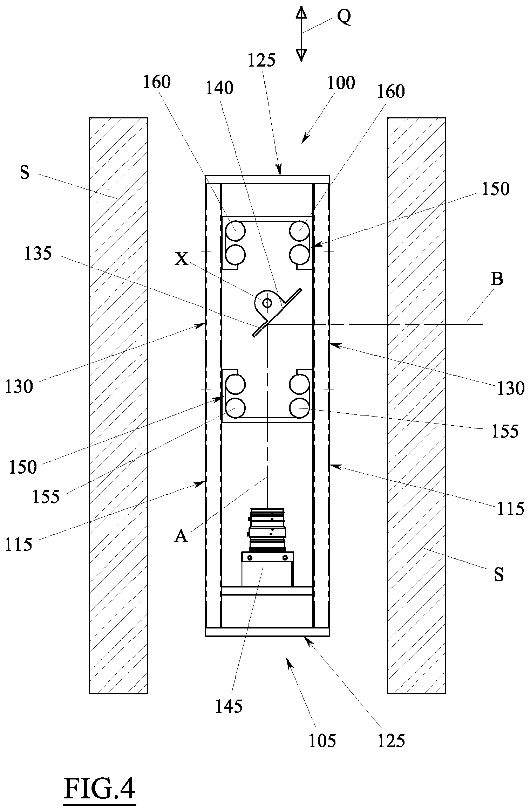

The slits 130 may be positioned in the vicinity of one of the two second side walls 125 (e.g. the upper side wall with respect to the figures) and may be reciprocally opposed, e.g. substantially mirrored with respect to a plane of symmetry parallel to and equidistant from the major side walls 115 (see, for example, figure 4).

In use, the frame 105 is intended to be arranged next to at least one filtering septum S to be scanned, so that at least one of the slits 130 is facing towards it.

More preferably, the frame 105 can be interposed between two filtering septa S to be scanned, e.g. equidistant from them, so that each slit 130 faces a respective filtering septum S.

In particular, in the exemplifying case illustrated in the figures, in which the filtering septa S are planar in shape and parallel to each other, the frame 105 can be oriented so that its major side walls 115 (bearing the slits 130) are parallel to the filtering septa S.

On the frame 105, for example within the casing defined therein, the following are installed: at least one mirror 135 having a reflective surface 140, at least one camera 145 having a predetermined optical axis A and at least one illuminating apparatus 150.

The optical axis A of the camera 145 naturally means the optical axis of an objective of said camera 145.

The camera 145 is generally arranged so that its optical axis A can intercept the reflecting surface 140 of the mirror 135, at an angle of incidence other than a right angle, so as to generate by reflection a reflected optical axis B, inclined and not coinciding with the original optical axis A, for example substantially orthogonal thereto.

In this way, while the optical axis A remains confined within the frame 105, the reflected optical axis B can pass through one of the slits 130, allowing the camera 145, through the reflective surface 140 of the mirror 135, to acquire images of a filtering septum S located outside the casing of the frame 105.

Turning to the illuminating apparatus 150, it is intended to generate a light capable of illuminating, for example through the same slit 130, at least one point of the reflected optical axis B located at a distance from the reflecting surface 140 of the mirror 135 and preferably outside the frame 105.

In this way, the illuminating apparatus 150 can be used to illuminate at least the area of the filtering septum S that is framed by the camera 145 through the reflecting surface 140 of the mirror 135.

Going into more detail, in the embodiment illustrated in figure 4, the camera 145 can be installed on the frame 105 in a fixed position, so that its optical axis A is always oriented in a constant manner, for example parallel to the height H of the frame 105 itself.

For example, the camera 145 may be fixed at one of the second side walls 125 of the frame 105, preferably the one furthest from the slits 130.

The camera 145 can also be positioned so as to be substantially equidistant from the first two side walls 120 and/or the major side walls 115.

The mirror 135, which can be positioned at essentially the same height as the two slits 130, can be rotatably associated with the frame 105, so that it can be oriented with respect to an axis of rotation X.

The axis of rotation X of the mirror 135 can be orthogonal (incident or non-incident) to the optical axis A of the camera 145 and is preferably oriented parallel to the width L of the frame 105.

Thus, through appropriate rotation of the mirror 135 about the axis of rotation X, the reflected optical axis B generated by the reflecting surface 140 can be oriented in different ways.

For example, the reflected optical axis B can be oriented in opposite directions by selectively passing it through one or the other of the two slits 130, in order to be able to film images of filtering septa S located on either side of the frame casing 105.

The rotation of the mirror 135 can be driven by an actuator (not shown), e.g. linear or rotary, which can be electric, piezoelectric, pneumatic, hydraulic or any other type and can be installed on board the frame 105.

To complete this embodiment, the device 100 further preferably comprises two illuminating apparatuses 150, one of which is capable of illuminating a point on the reflected optical axis B, when the latter passes through a slit 130, and another capable of illuminating a point on the reflected optical axis B, when the latter passes through the other slit 130.

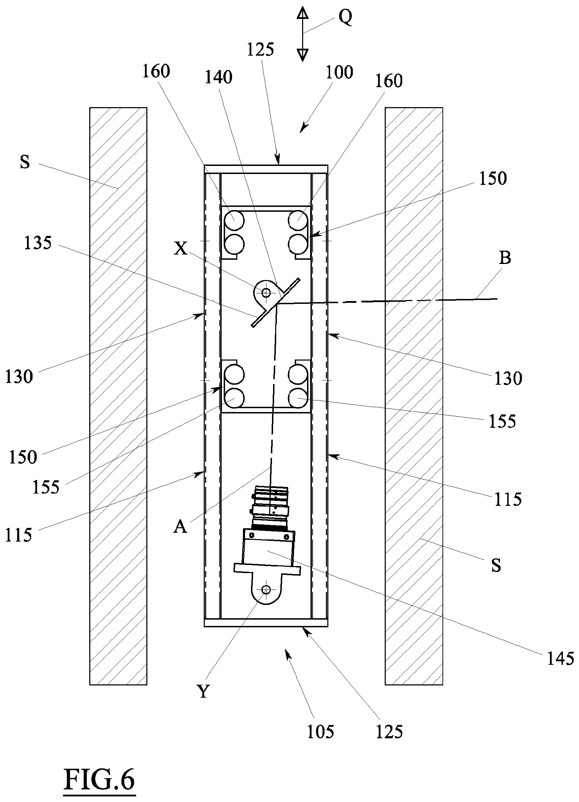

In order to improve the triangulation between the camera 145 and the mirror 135, a second embodiment illustrated in figure 6, which is otherwise entirely analogous to the previous one, envisages that the camera 145 can also be oriented on the support frame 105 by rotating about an axis of rotation Y orthogonal to the optical axis A of the camera 145 itself, for example parallel to the axis of rotation X of the mirror 135.

In this way, depending on whether images are to be taken on one side or the other of the support frame 105, it is advantageously also possible to orient the camera 145 accordingly.

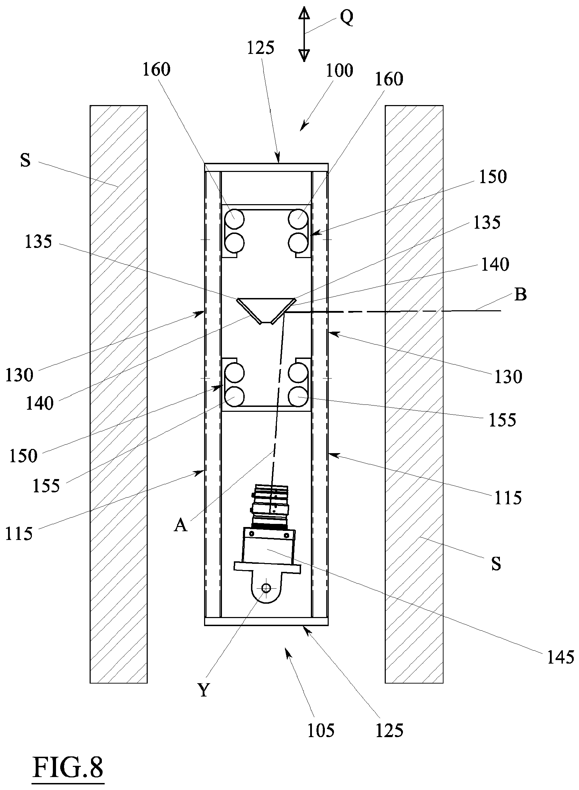

Alternatively, a third embodiment illustrated in figure 8, which is otherwise similar to the second embodiment, involves the possibility of replacing the oscillating mirror 135 with two mirrors, i.e. with a first and a second mirror 135, which are individually equipped with a respective reflective surface 140.

These first and second mirrors 135 may be fixedly installed on the support frame 105 and may be arranged so that their respective reflective surfaces 140 are substantially symmetrical with respect to a plane of symmetry containing the axis of rotation Y of the camera 145 and, for example, parallel to the major side walls 115 of the support frame 105. Thus, by rotating the camera 145 about the axis of rotation Y, it is possible to direct the optical axis A selectively towards the reflective surface 140 of the first mirror 135 or towards the reflective surface 140 of the second mirror 135, in both cases at an angle of incidence other than a right angle, so as to obtain respectively a first reflected optical axis B, directed in one direction within one of the slits 130, and a second reflected optical axis (not traced but mirroring the previous one), directed in the opposite direction within the other slit 130.

The three embodiments illustrated so far have the advantage that they allow, via a single camera 145, the scanning of filtering septa S that are arranged on opposite sides of the support frame 105.

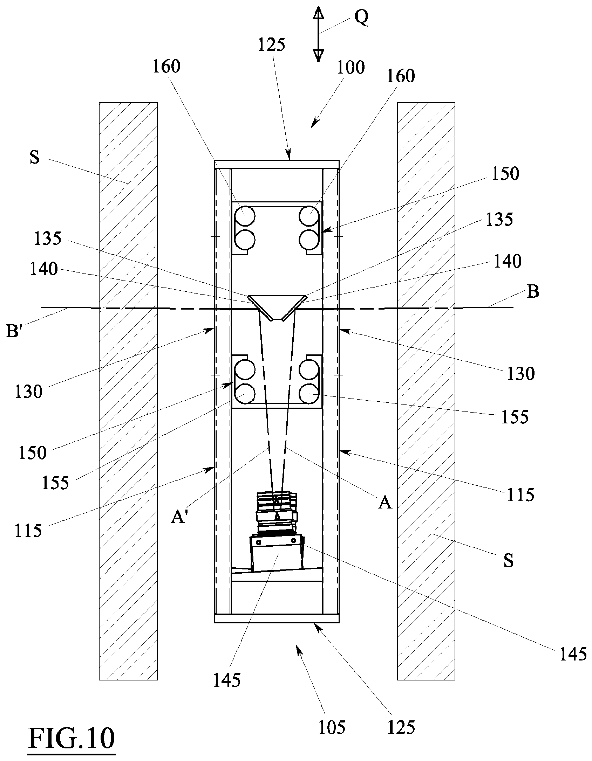

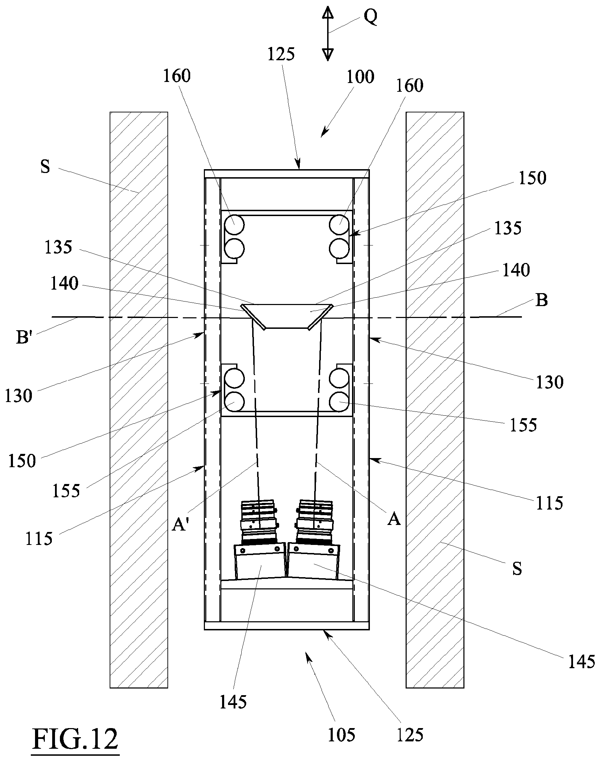

With these solutions, however, scanning can only take place for one septum S at a time. In order to allow simultaneous scanning of both filtering septa S, other embodiments, illustrated in figures 10 and 12, involve replacing the oscillating camera 145 in figure 8 with a first and second camera 145, which have a first optical axis A and a second optical axis A', respectively.

These first and second cameras 145 can be installed fixed on the support frame 105 and can be arranged so that their respective optical axes A and A' are substantially specular with respect to the same plane of symmetry of the reflecting surfaces 140 of the two mirrors 135.

In particular, the optical axis A of the first camera 145 may be directed, at an angle of incidence other than a right angle, towards the reflecting surface 140 of the first mirror 135, resulting in a first reflected optical axis B directed in one direction, while the optical axis A' of the second camera 145 may be directed, at an angle of incidence other than a right angle, towards the reflecting surface 140 of the second mirror 135, resulting in a second reflected optical axis B' directed in the opposite direction to the previous one.

The first and second cameras 145 may be placed side-by-side along the direction of the width L of the frame 105, as in the embodiment of figure 10, or along the direction of the thickness S, as in the embodiment of figure 12, and may be placed substantially adjacent to each other within a short distance.

In any embodiment, for example in any of those outlined above, the components of the device 100 may have the following characteristics.

As for each mirror 135, its reflective surface 140 can be either a flat surface or a convex surface or a concave surface.

In all cases, said reflective surface 140 may extend, e.g. with a constant transverse profile, predominantly along a predetermined longitudinal direction of the mirror 135.

In other words, the reflective surface 140 may have one dimension greater than the other and said greater dimension may be oriented parallel to said longitudinal direction.

This longitudinal direction is preferably orthogonal (although not necessarily incident) to the optical axis(es) A and/or A' of the camera(s) 145.

For example, the longitudinal direction of the mirror(s) 135 may be parallel to the width L of the frame 105 or parallel to the axis of rotation X of the mirror of figures 4 or 6 and/or parallel to the axis of rotation Y of the camera 145 of figures 6 or 8.

Each mirror 135 can be either a traditional type or a mirror with first-surface reflection.

The dimensions of each mirror 135 can vary from a minimum of 5x10 mm to a maximum of 50x1000 mm, while the thickness can be between 0.1 and 10 mm.

In the embodiments of fixed mirrors 135, each mirror may be inclined at an angle comprised between 5° and 175° to the optical axis A and/or A' of the camera(s) 145.

In particular, the inclination must be such as to ensure that the reflected light hits the objective of the camera 145 correctly.

Turning to the cameras 145, each of them may be, for example, a matrix camera or a linear camera.

In the embodiments with an oscillating camera 145, the camera 145 can be moved by an actuator (not shown), e.g. linear or rotary, which can be electric, piezoelectric, pneumatic, hydraulic or any other type and can be installed on the frame 105.

The support for the camera 145 may allow for 1-, 2- or 3-axis position adjustment.

As far as the illuminating devices 150 are concerned, each of them may be capable of emitting light with a wavelength comprised between 10 nm (ultraviolet) and 1 mm (infrared).

The light emitted by each of the illuminating devices 150 may also be either continuous or stroboscopic.

As illustrated in all of the previous embodiments, each illuminating apparatus 150 may comprise one or more illuminators 155 positioned between the mirror(s) 135 and the camera(s) 145 and one or more illuminators 160 positioned on the opposite side of the mirror 135 with respect to the camera 145.

However, it is not excluded that, in other embodiments, each illuminating apparatus 150 may comprise only one or more illuminators 155 or only one or more illuminators 160.

In all cases, the number of illuminators 155 and/or 160 of each illuminating apparatus is preferably comprised between a minimum of 1 and a maximum of 6.

The illuminators 155 and/or 160 can work independently or coordinated with each other. Each of the above-mentioned illuminators 155 or 160 can be of the spot light or extended type (e.g. linear).

In the second case, each illuminator 155 or 160 can extend predominantly in a predetermined longitudinal direction.

Said longitudinal direction may be orthogonal (although not necessarily incident) to the optical axis(es) A and/or A' of the camera(s) 145.

For example, the longitudinal direction may be parallel to the longitudinal direction of the mirror(s) 135, or parallel to the width L of the frame 105, or parallel to the axis of rotation X of the mirror of figures 4 or 6 and/or parallel to the axis of rotation Y of the camera 145 of figures 6 or 8.

Specifically, it is preferable for each illuminator 155 and/or 160 to extend the full length of the mirror(s) 135.

The light generated by the illuminator(s) 155 and/or 160 can be projected directly onto the filtering septum S, e.g. through one of the slits 130, or it can be diffused by means of a lens (e.g. opaque) or it can be focused with an aperture angle comprised between 5° and 130° and can be selected/adjusted from time to time depending on the nature of the filtering septum S.

In the latter case, in addition to the illuminators 155 and/or 160, each illuminating apparatus 150 may thus comprise one or more lenses (not shown) adapted to diffuse and/or focus the light generated by the illuminators.

The angle of incidence of the light generated by each illuminator 155 or 160 with respect to the filtering septum S may be comprised between 5° and 175°, and may be chosen on a case-by-case basis according to the nature of the filtering septum S.

In order to protect the camera(s) 145, the mirror(s) 135 and the illuminator(s) 155 and/or 160, in addition to the infill panels 110 defining the casing of the frame 105, it is preferable to provide gaskets to make the entire structure watertight.

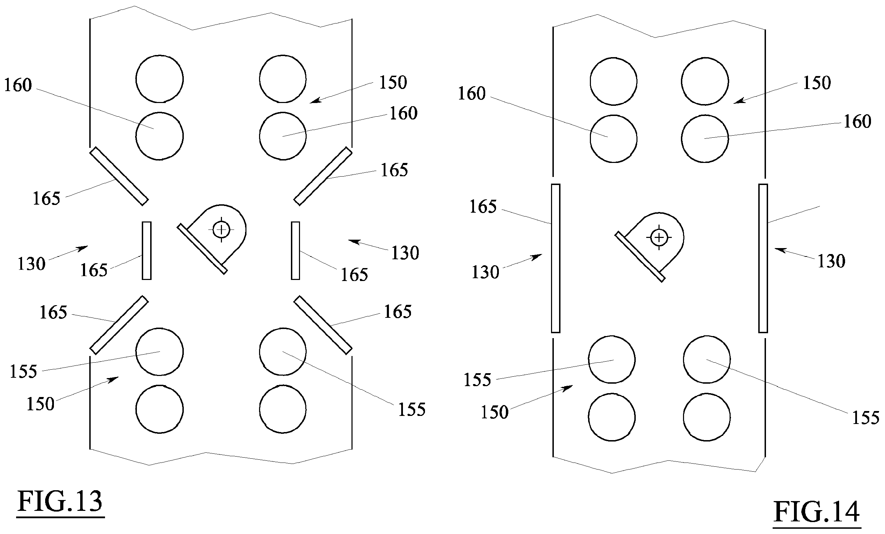

As illustrated in the details of figures 13 and 14, it is also preferable to close each slit 130 with one or more protective glass panes 165 which, for example, are capable of preventing the entry of solid materials and/or liquids but which, at the same time, are sufficiently transparent to allow the light of the illuminators 155 and/or 160 to exit and the camera(s) 145 to frame the filtering septum/septa S located outside.

The protective glass pane 165 may be plain, laminated, tempered or optical glass. Anti-reflective and/or hydrophobic treatments can be applied to its surface.

In some embodiments (e.g. that of fig. 14), each slit 130 may be entirely closed by a single protective glass pane 165 which may be arranged parallel/coplanar to the corresponding major side wall 115.

In other embodiments (e.g., that of fig. 13), each slit 130 may be closed by a plurality of protective glass panes 165, of which at least one central glass pane located within the frame 105, oriented parallel to the corresponding major side wall 115, or substantially orthogonal to the reflected optical axis B or B' of the camera 145, and one or more further side protective glass panes 165, each of which is inclined with respect to the central one, e.g., oriented substantially orthogonal to an emission direction of the light generated by the corresponding illuminating apparatus 150.

For example, in the case where each illuminating apparatus comprises both illuminators 155 and illuminators 160, it is preferable to have two of said additional side protective glass panes 165, one of which is substantially orthogonal to the emission direction of the light generated by the illuminators 155 and another substantially orthogonal to the emission direction of the light generated by the illuminators 160.

This prevents problems of light reflection on the protective glass pane 165, which could otherwise worsen the illumination of the filtering septum S and the quality of the images taken by the camera 145.

All side protective glass panes 165 may be substantially rectangular in shape with the prevailing dimension parallel to the prevailing dimension of the slit 130 and may be placed adjacent to each other to be connected at two long sides, or spaced out and individually supported by a suitable support structure (not shown).

In order to keep the protective glass panes 165 clean, an automatic cleaning system (not shown) can be provided, which can be implemented by means of a rotating brush, a glass squeegee and/or a sprayer that sprays water directly onto the glass.

In addition, a drying system (also not shown) may be provided to dry the glass panes after cleaning, which may include a system using compressed air or a blower.

Of course, the images of the filtering septum S that can be acquired with the device 100 outlined above (in all embodiments) are generally limited to a portion of the filtering septum/septa S, the size of which depends on the framing angle of the camera(s) 145 and the size of the reflecting surface 140 of the mirror(s) 135.

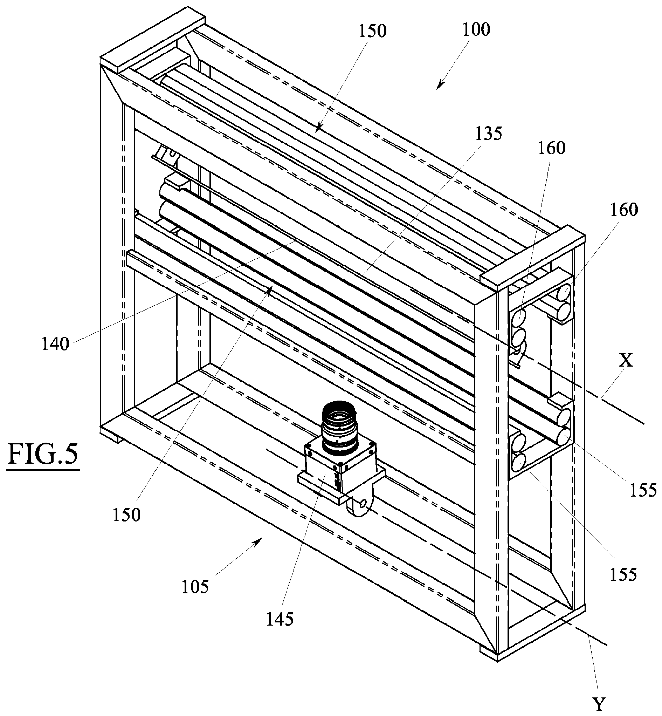

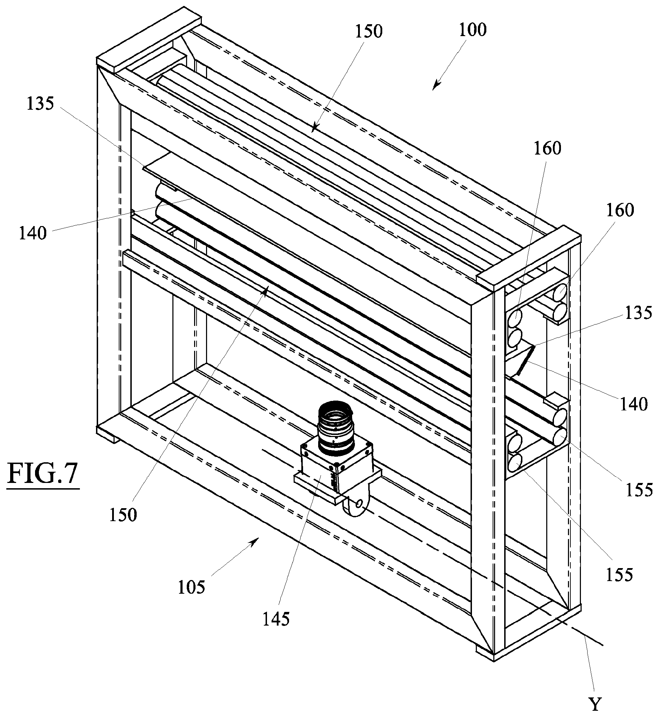

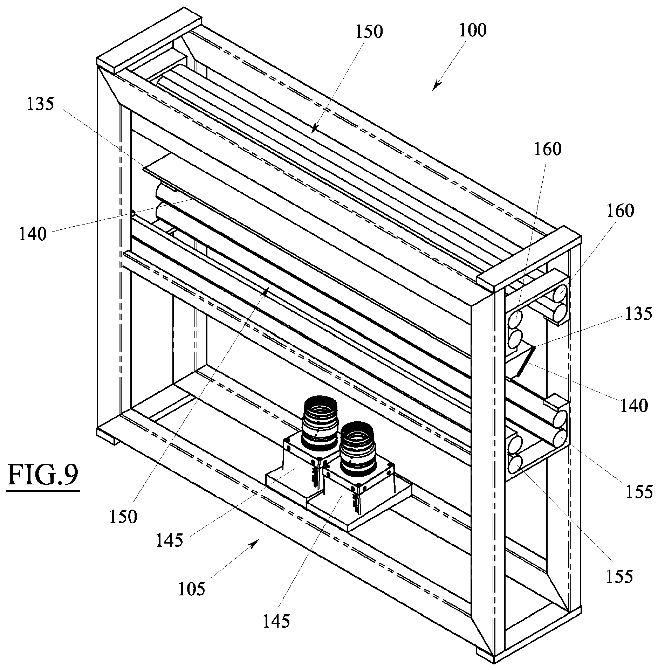

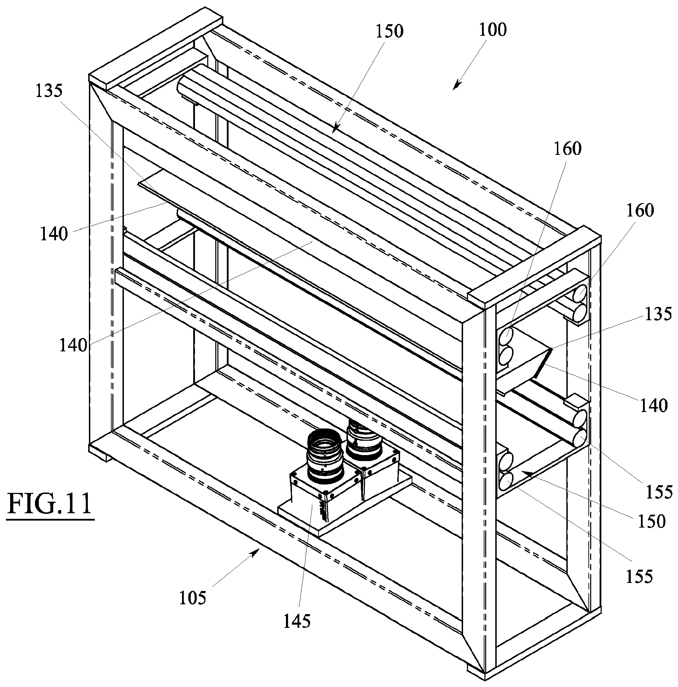

Therefore, it is envisaged that the frame 105 of the device 100 can be coupled to suitable movement means (not illustrated in figures 1 to 14 but an example of which will be provided below), capable of moving it with respect to the filtering septum/septa S at least along a predetermined direction Q, e.g. substantially parallel to the optical axes A or A' of the camera(s) 145 and/or e.g. parallel to the filtering septum/septa S, so that, by sequentially acquiring a plurality of images during said movement, the device 100 can scan at least one (preferably complete) band of the filtering septum/septa S along said direction Q.

In this regard, the camera(s) 145 of the device 100 can be connected with an electronic control unit (not shown) adapted to "merge" the captured images and form a single one. The handling speed (and thus the scanning speed of the filtering septum S) can be comprised between 0.5 and 10000 mm/s.

The movement means may include belts, chains, gears, racks, articulated quadrilaterals, Cartesian or anthropomorphic robots.

To scan large filtering septa S also in a transverse direction, the device 100 described above (in any embodiment) can be used as part of a modular system 200.

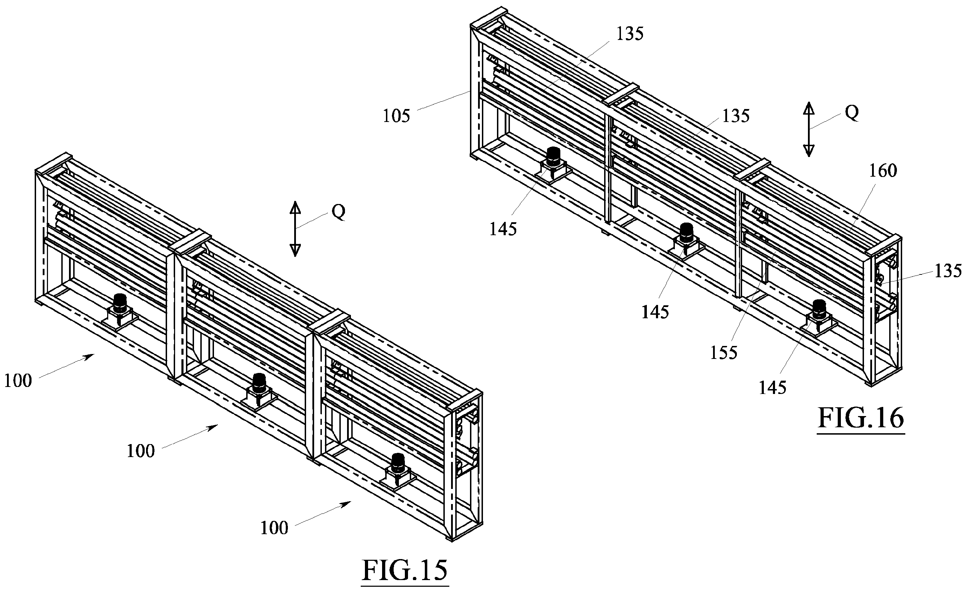

In other words, as illustrated in figure 15, the modular system 200 may comprise a plurality of devices 100, preferably the same as each other, all of which may be oriented in the same way and may be arranged in a row along the direction of the width L of the respective frames 105, which may in turn be arranged parallel to the filtering septa S and orthogonal to the translation direction Q.

The frames 105 of these optical devices 100 can then be brought into contact with each other and, if necessary, fixed by any mechanical connection, e.g. by bolting or bracketing. In this way, each of the devices 100 retains its functional independence, but overall allows the scanning of very large filtering septa S.

For example, a modular system 200 consisting of three devices 100 is shown in figure 15, but it is not excluded that, in other embodiments, the number of devices 100 may be greater or lesser depending on the size of the filtering septum S to be scanned.

Another possibility for scanning large filtering septa S is to use a single frame 105 which, as illustrated in figure 16, carries a plurality of functional groups individually consisting of at least one or more cameras 145 and one or more mirrors 135 (e.g. according to any of the embodiments outlined above).

In this case, each functional group can also comprise one or more respective illuminating devices 150, or illuminating devices 155 and/or 160 can be provided that span the entire width of the frame 105 to serve all the functional groups.

This configuration allows for a lighter system than the modular system 200.

Again, although figure 16 depicts the presence of three functional groups on the same frame 105, it is possible to envisage embodiments in which a single frame supports and carries a greater or lesser number of functional groups, depending on the size of the filtering septum S to be scanned.

A third possibility (not illustrated) could be that the movement means are capable of moving the device 100, not only in the direction Q, but also in a transverse direction, e.g. in a direction orthogonal to the direction Q and parallel to the filtering septum/septa S.

In this way, the device 100 could be used to scan the septum/septa S for its/their full extension, regardless of size.

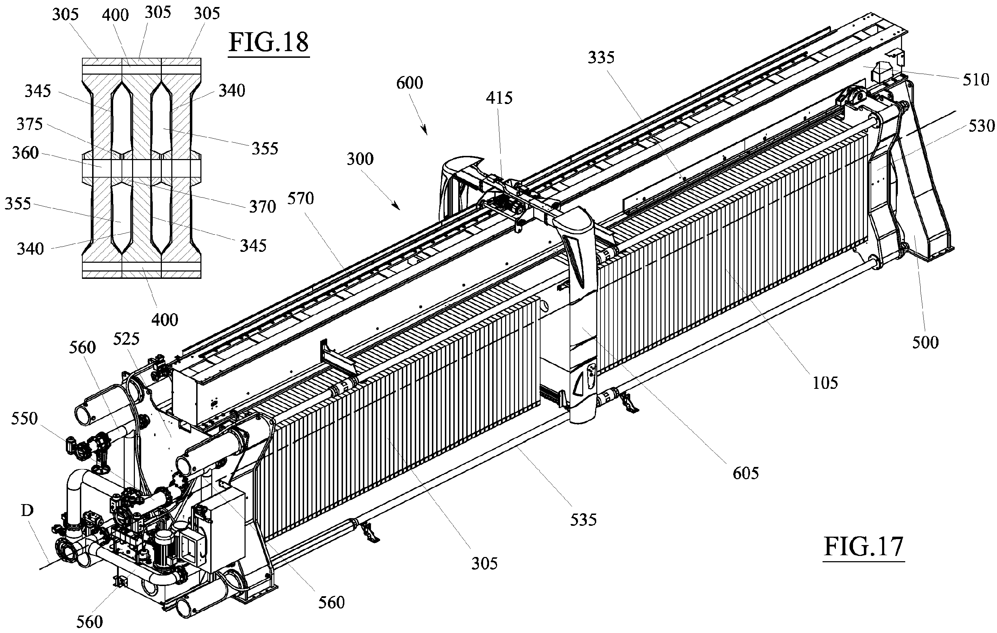

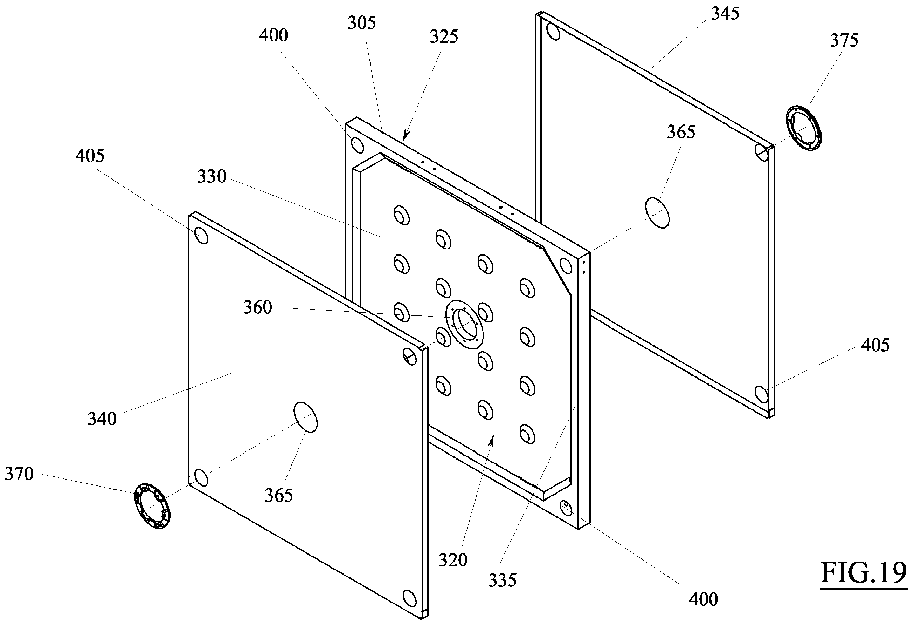

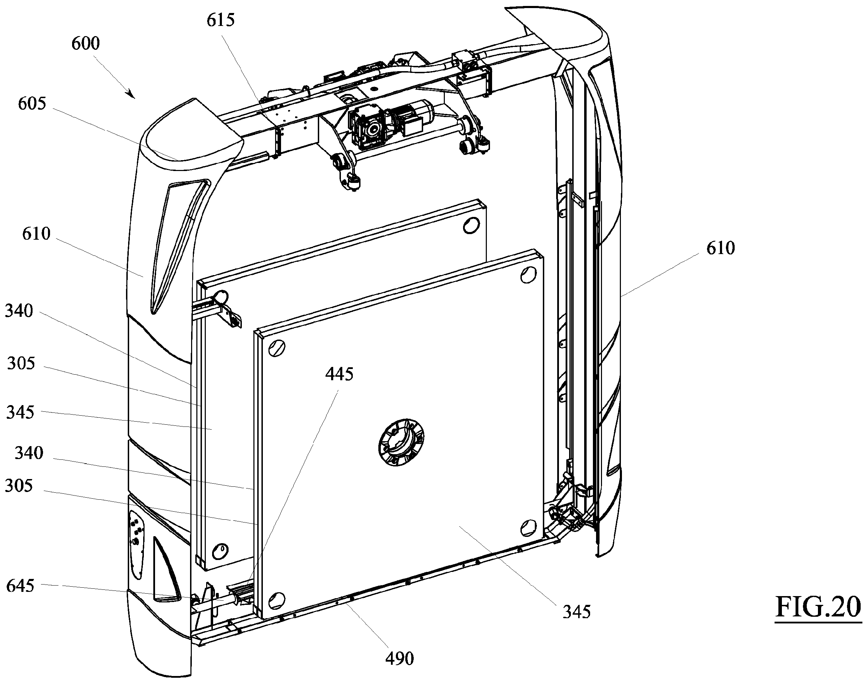

With reference to figures 17 to 21, a filtration apparatus which, in addition to comprising at least one filtering septum S, may be equipped with the optical acquisition device 100 (or related system 200) outlined above, in accordance with any embodiment, is now described by way of non-limiting example.

In particular, this filtration apparatus is a filter press 300, which is generally designed to filter liquid substances in which suspended solids, known as solid-liquid suspensions, are dispersed.

For example, the filter press 300 can be used to filter sludge from both civil and industrial wastewater treatment processes, or from other technological processes, typically but not exclusively chemical/pharmaceutical or mining.

The filter press 300 comprises a plurality of containment plates 305 mutually aligned along a predetermined longitudinal direction D, preferably horizontal.

Each of these containment plates 305 is generally shaped like a thin body having two main faces of a larger size, mutually opposed and substantially parallel, and a (much) smaller thickness than the size of the main faces.

The containment plates 305 are oriented orthogonally with respect to the longitudinal direction D, which is thus substantially parallel to their thickness, and are arranged in succession along said longitudinal direction D, so that they are adjacent to one other.

In particular, each containment plate 305 may have a substantially rectangular or square shape, comprising a lower flank, an upper flank and two lateral flanks, which define the perimeter of the main faces.

Regardless of their specific shape, the containment plates 305 of the filter press 300 may be identical to one other and may be arranged so as to be mirrored two by two.

The containment plates 305 are slidably associated with a support structure 500, with respect to which they can slide in a direction parallel to the longitudinal direction D.

In the embodiment illustrated herein, the support structure 500 comprises a longitudinal member 510 extending parallel to the longitudinal direction D, overlying the containment plates 305.

Hooks (not illustrated) may be fixed to the upper flank of each containment plate 305, which are slidably suspended from the same number of guide bars (also not illustrated) fixed to the support structure 500 and extending parallel to the longitudinal member 510. Being on board the support structure 500, the containment plates 305 are preferably interposed, in the direction of the longitudinal direction D, between a fixed head 525 and a movable head 530.

Each containment plate 305 thus comprises a front main face 320 facing the fixed head 525 and a rear main face 325 facing the movable head 530.

Both the front face 320 and the rear face 325 may comprise a recess 330 and a side frame 335 perimetrally delimiting said recess 330.

The movable head 530 can be moved towards and away from the fixed head 525, sliding in the longitudinal direction D.

This movement of the movable head 530 can be achieved by means of suitable movement systems, which may comprise, for example, one or more hydraulic jacks 535.

Moving towards the fixed head 525, the movable head 530 is able to close all of the containment plates 305 of the filter press 300 in a pack with one other and against the fixed head 525 itself.

Conversely, by moving away from the fixed head 525, the movable head 530 can leave sufficient space for each pair of consecutive containment plates 305 to move from a closed configuration (in which they are clamped as a pack), to an open configuration, in which said pair of containment plates 305 are mutually spaced apart.

For example, the movement from the closed configuration to the open configuration can be achieved by means of a separating device (not illustrated), sliding in the longitudinal direction A, which is capable of engaging one containment plate 305 at a time, starting from the one closest to the movable head 530, and moving it away by a predetermined amount from the next containment plate 305.

Regardless of these considerations, two filtering septa are associated with each containment plate 305, of which a first filtering septum 340 adapted to line its front face 320 and a second filtering septum 345 adapted to line its rear face 325.

In particular, each of these filtering septa 340 and 345 may be adapted to adhere to the perimeter frame 335 of the respective main face and to fully cover the recess 330 thereof, for example by assuming its shape and adhering to the bottom thereof.

In the example illustrated, each of the filtering septa 340 and 345 consists of a portion of filtering cloth.

However, it is not excluded that, in other embodiments, each of the filtering septa 340 and 345 may consist of a grid, mesh or perforated sheet, for example made of metal material.

This first and second filtering septum 340 and 345 can be fixed to the respective containment plates 305 in many different ways, without thereby departing from the scope of the present discussion.

For example, the filtering septa 340 and 345 can be partially wrapped around and attached to the side walls of the containment plate 305.

In the illustrated embodiment, a first and a second separate and distinct filtering septum 340 and 345 are associated with each containment plate 305.

However, it is not excluded that, in other embodiments, the first and second filtering septa 340 and 345 may be joined together to form a single body.

In any case, the final result of this construction is that between each pair of consecutive containment plates 305 there always remain interposed two mutually facing filtering septa 340 and 345, of which the first is associated with the containment plate 305 closest to the movable head 530 while the second is associated with the containment plate 305 closest to the fixed head 525.

When these containment plates 305 are in a closed configuration, the first and second filtering septa 340 and 345 interposed therebetween are substantially in contact with each other at the perimeter frames 335 while they may be at least slightly spaced apart at the recesses 330.

Accordingly, a narrow, substantially closed filtration chamber 355 remains defined between these first and second filtering septa 340 and 345, as illustrated in the simplified diagram of Figure 18, which is suitable for receiving the liquid to be filtered.

The liquid to be filtered may be fed into the filtration chambers 355 through one or more inlet ducts, each of which is made from a sequence of through holes which are obtained directly in the containment plates 305.

For example, in the embodiment illustrated here, the filter press 300 comprises a single inlet duct, which is realised by a sequence of through holes 360 individually made in a respective containment plate 305.

In practice, each containment plate 305 comprises a through hole 360 having an axis parallel to the longitudinal axis D and substantially coaxial to the corresponding through holes 360 of all the other containment plates 305 of the filter press 300.

This through hole 360 can be made in the centre of the containment plate 305, for example at the bottom surface of the recesses 330.

In a coaxial position to this through hole 360, the first and second filtering septa 340 and 345 associated with the same containment plate 305 also have respective through holes 365.

Each containment plate 305 is further provided with two distribution rings arranged coaxially with the through hole 360, of which a first distribution ring 370 is fixed to the front face 320 of the containment plate 305, for example to the bottom surface of its recess 330, and a second distribution ring 375 is fixed to the rear face 325 of the same containment plate 305, for example to the bottom surface of its recess 330.

In this context, the through holes 365 of the first and second filtering septa 340 and 345 preferably have a smaller diameter than the outer diameter of the distribution rings 370 and 375, so that the first distribution ring 370 is also adapted to clamp the first filtering septum 340 against the front face 320 of the containment plate 305, while the second distribution ring 375 is also adapted to clamp the second filtering septum 345 against the rear face 325 of the containment plate 305.

When all the pairs of containment plates 305 are in a closed configuration, i.e., when all containment plates 305 are packed together, the first distribution ring 370 of each containment plate 305 may be frontally in contact with the second distribution ring 375 of an adjacent containment plate 305, making a section of pipe therewith that passes through the filtration chamber 355.

At the mutual contact zone, these first and second distribution rings 370 and 375 may, however, be shaped in such a way as to define lateral openings which place the section of pipe in hydraulic communication with the filtration chamber 355.

By means of the through holes 360 obtained in the containment plates 305, this section of pipe is then in hydraulic communication with the similar sections of pipe defined between all the other pairs of containment plates 305, thus forming overall the aforementioned inlet duct.

The inlet duct is then connected to an inlet hydraulic circuit to supply it with the fluid to be filtered.

In the embodiment illustrated herein, the inlet hydraulic circuit may comprise a single supply duct 550 that engages with the through hole 360 of the first containment plate 305 proximal to the fixed head 525, and a pump (not shown) that pumps the liquid to be filtered into said supply duct 550.

The liquid to be filtered which reaches the filtration chambers 355 tends to cross the first and second filtering septa 340 and 345 which delimit each of them, while the solid part remains inside forming a relatively compact deposit.

After passing through the filtering septa 340 and 345, the filtered liquid flows into one or more collection ducts, each of which may be made from a sequence of through holes 400 which are obtained directly in the containment plates 305, similarly to the previously described inlet ducts.

In practice, each containment plate 305 comprises one or more through holes 400, each of which has an axis parallel to the longitudinal direction D and is coaxial with a corresponding through hole 400 of all the other containment plates 305.

Each of these through holes 400 may be made at the perimeter frames 335 of the respective containment plate 305, externally to the recesses 330.

In the embodiment illustrated, each containment plate 305 comprises, for example, four through holes 400 positioned at the edges of the containment plate 305 itself.

In a coaxial position with each through hole 400, the first and second filtering septa 340 and 345 associated with the containment plate 305 also have a respective through hole 405.

When all the pairs of containment plates 305 are in a closed configuration, i.e., when all the containment plates 305 are packed together, each through hole 400 of a containment plate 305 is in hydraulic communication with a succession of homologous through holes 400 of all the other containment plates 305, forming overall one of the aforementioned collection ducts.

Each through hole 400 is also in communication, for example through a suitable system of channels obtained in the body of the containment plate 305, with a narrow cavity that remains defined between the front face 320 of the containment plate 305 and the first filtering septum 340, for example between the latter and the bottom surface of the recess 330 made in said front face 320, and/or with a narrow cavity that remains defined between the rear face 325 of the containment plate 305 and the second filtering septum 345, for example between the latter and the bottom surface of the recess 330 made in said rear face 325.

In this way, the filtered liquid passing through the filtering septa 340 and 345 first flows into said cavities and then, through internal channels, reaches the through holes 400 and then the collection ducts.

These collection ducts are in turn connected, preferably at the fixed head 525, to a hydraulic outlet circuit adapted to discharge the filtered fluid, conveying it, for example, to a storage tank, a disposal system or to other uses.

The hydraulic outlet circuit may comprise, for example, a plurality of conveying ducts 560 which individually engage with a respective through hole 400 of the first containment plate 305 proximal to the fixed head 425, and which may then converge into a single discharge pipe.

It is specified herein that the supply of the fluid to be filtered inside the filtration chambers 355 and the consequent extraction of the filtered liquid does not take place continuously, but is interrupted after a certain period of time, when the filtration chambers 355 are substantially full of solid residue which forms the aforementioned compact deposit.

At this point, each pair of consecutive containment plates 305 is brought into an open configuration, as outlined above.

In this way, the first and second filtering septa 340 and 345 which are interposed between said pair of containment plates 305 separate in the longitudinal direction D, laterally opening the filtration chamber 355 and thus allowing the compact deposit to fall downwards outside the filter press 300.

This compact deposit can then be collected, for example, in special compartments provided underneath the containment plates 305, for disposal or further treatment.

However, in prolonged use, some of the solid material separated from the filtered liquid may remain attached to the filtering septa 340 and 345, soiling them and reducing their efficiency.

For this reason, the filter press 300 generally comprises a washing robot, indicated overall with 600, which is in charge of washing the filtering septa 340 and 345 located between each pair of consecutive containment plates 305, for example after each filtration cycle or after a certain number of filtration cycles.

This washing robot 600 may comprise a trolley 605, which is movable with respect to the containment plates 305 along the longitudinal direction D.

In particular, the trolley 605 can be slidably coupled to the support structure 500 and can be shaped so as to be able to move at the containment plates 305 (which remain stationary), without interfering with them.

In the embodiment illustrated, the trolley 605 of the washing robot 600 may have a gantry structure lying in a plane transverse to the longitudinal direction D and delimiting a passage facing and aligned with the succession of containment plates 305.

In particular, the trolley 605 may comprise two vertical uprights 610 positioned on opposite sides with respect to the containment plates 305, and an upper crossbar 615 which, by joining the two vertical uprights 610, overlies the containment plates 305.

This trolley 605 may be slidably coupled to the support structure 500 by means of the upper cross member 615, which is supported and slides along the longitudinal member 510 extending parallel to the longitudinal direction A overlying the containment plates 305. The sliding of the trolley 605 can be delegated to an electromechanical system comprising a rectilinear rack 570 fixed to the longitudinal member 510, and at least one pinion (not visible) installed on the upper crossbar 615 which, driven by an electric motor, rotates in engagement with the rectilinear rack 570.

The sliding of the trolley 605 on the support structure 500 could, however, be delegated to any other known driving device, for example electromechanical or electro-hydraulic.

The washing robot 600 may further comprise a bar 645, which is installed on board the trolley 605 and is movable with respect to the latter in a transverse direction (e.g. orthogonal) to the longitudinal direction D, so as to be able to move in the space comprised between any pair of consecutive containment plates 305, when the latter are in an open configuration.

In particular, the bar 645 may be straight, preferably horizontal and oriented orthogonally to the longitudinal direction D, and may be provided, with respect to the trolley 605 on which it is installed, with a translation movement in a vertical direction between an upper and a lower end position.

In the upper end position, the bar 645 may be placed at a higher level than the containment plates 305, while in the lower end position, it may be placed at substantially the same level as their lower flank or below.

A plurality of nozzles 650 may be associated with the bar 645, each of which is capable of delivering a jet of a washing liquid, typically water, towards the first and/or second filtering septum 340 and 345 covering respectively the front face 320 of one and the rear face 325 of the other containment plate 305 of the pair.

For example, the bar 645 may be provided with a first array of nozzles 650, arranged for example in a row along the longitudinal extension thereof, which are directed towards the fixed head 525, and/or a second array of nozzles 650, arranged for example in a row along the longitudinal extension thereof, which are directed towards the movable head 530.

In order to dispense the jets of washing liquid, the nozzles 650 may be connected to a suitable hydraulic washing liquid supply system, which may generally comprise a pump, preferably a high pressure pump, which is adapted to take the washing liquid from a tank or a supply network and to send it under pressure to the nozzles 650 from which it flows. In particular, this hydraulic supply system may comprise at least one manifold 655, which is attached to and/or forms an integral part of the bar 645.

This manifold 655 is shaped like a hollow body, for example a tube, which preferably has a straight extension and is oriented parallel to the bar 645.

The nozzles 650 can be directly inserted into respective through holes in the side wall of the aforementioned manifold 655 or be directly defined by the latter.

In the embodiment illustrated, the bar 645 comprises and is substantially defined by a single manifold 655, with which both the nozzles 650 facing the fixed head 525 and the nozzles 650 facing the movable head 530 are associated.

The movement of the bar 645 on board the trolley 605 can be operated by any driving system, e.g. electromechanical or electro-hydraulic.

The operation of the washing robot 600 provides for the trolley 605 to slide on the support structure 500 along the longitudinal direction D and to be stopped, one after the other, at all the consecutive pairs of containment plates 305 that are in an open configuration.

During the sliding of the trolley 605, the bar 645 is kept in the upper end position so as not to interfere with the containment plates 305.

When the trolley 605 is stopped, the bar 645 is then vertically aligned with the space comprised between a pair of consecutive containment plates 305 and in an open configuration.

Consequently, the bar 645 can be operated to move with respect to the trolley 605 (which remains stationary) in a vertical direction from the upper end position to the lower end position and back again.

During one or both of these strokes, the washing fluid supply hydraulic system may be operated so that the nozzles 650 installed on the bar 645 deliver jets of washing fluid (preferably at high pressure) onto the filtering septa 340 and 345 lining the containment plates 305, washing them and removing any solid deposits that may have remained attached.

However, following the repetition of the filtration cycles, the filtering septa 340 and 345 which are associated with the containment plates 305 are in any case subject to progressive wear and/or may be damaged by accidental events, thus requiring replacement.

To monitor the integrity and wear condition of the filtering septa 340 and 345, the filter press 300 is equipped with a screening system thereof.

In accordance with an embodiment of the present discussion, this screening system may comprise at least one of the optical acquisition devices 100 that have been described above, or more preferably a system 200 extending across the full width of the containment plates 305, which may be moved between each pair of consecutive containment plates 305, when they are in an open configuration and in the manner already set out above, so as to scan the filtering septa 340 and/or 345.

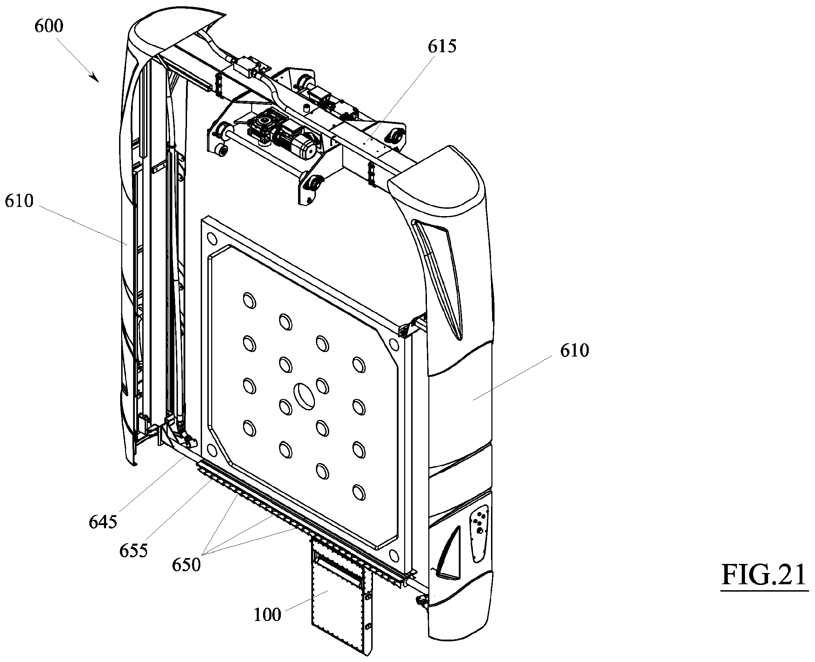

For example, as illustrated in figure 21, said device 100 can be installed (e.g. hooked) on the bar 645 of the washing robot 600, so that it is oriented parallel to the containment plates 305 with its width L parallel to the bar 645 itself.

Alternatively, if the filtering septa 340 and 345 are very large, the screening system may comprise, as mentioned above, a plurality of said devices 100, forming a modular system 200 (possibly with a single frame 105), which may likewise be installed (e.g., hooked) on the bar 645 of the washing robot 600.

Thus, by moving the bar 645 between a pair of consecutive containment plates 305 and in an open configuration, the device(s) 100 are able to acquire one or more images of the first and/or second filtering septa 340 and 345.

Although the case has been assumed where the device(s) 100 are installed on the bar 645 of the washing robot 600, it is not excluded that, in other embodiments, the device(s) 100 may be installed on another robot dedicated thereto.

Such a robot may be structurally similar to, but functionally independent of, the washing robot 600.

As envisaged, the device(s) 100 can be connected to a central processing unit, which can be configured to process and combine the images taken by each device 100, so as to obtain a complete image of each filtering septum 340 and 345, in practice obtaining a true scan thereof.

The connection to the electronics unit can be made via any connection system, either wired or wireless.

The images of each filtering septum 340 and 345 may be used by the computer processing unit to verify whether said filtering septum is damaged, for example whether it has damage at an early stage (abrasions or micro-lesions) and/or at an advanced stage (macro-lesions), and/or to perform a predictive assessment of its residual duration.

For example, the electronic processing unit can be configured to determine, based on images of each of the filtering septa 340 and 345, the state of wear of the filtering septum and/or to predict how many filtration cycles the filtering septum can still perform before it becomes damaged or otherwise inefficient.

In practice, the electronic processing unit will be able to detect any defects in the filtering septa 340 and 345 in advance, even before the defect can develop into permanent damage to the containment plate 305 behind.

The determination of the residual duration can be performed by the electronic processing unit by executing a suitable evaluation logic, for example based on a suitably trained artificial intelligence algorithm, which receives the images of the filtering septum 340 or 345 as input and automatically provides its residual duration as output.

This evaluation logic can also take into account other aspects, such as the degree of abrasiveness of the liquid to be filtered and/or the filtration pressures.

The residual duration can then be communicated to the operators, for example by means of an interface system, so that they can plan the replacement of the different filtering septa 340 and 345.

By way of example, the evaluation logic used by the electronic processing unit may be based on a model (e.g. mathematical, statistical or empirical) describing the wear pattern of the filtering septa 340 and 345 with respect to the time of use or the number of filtration cycles performed.

This model can be modified/updated by the electronic processing unit by means of a self-learning process which, by analysing and/or processing the (historical) images of each filtering septum 340 and 345 taken by the screening system at successive times, that is after a progressively increasing number of filtration cycles have been carried out, is able to understand the evolution of the wear of the filtering septa 340 and 345 over time.

In other words, after acquiring a plurality of images of a plurality of said filtering septa 340 and 345 at successive times, the electronic processing unit will advantageously be able to use all these images, for example by means of the aforementioned artificial intelligence-based self-learning process, to modify the model on which the residual duration assessment logic is based.

In this way, the model will be constantly updated and can be more faithful to the real behaviour of the filter press 300.

Obviously, a person skilled in the art may make several technical-applicative modifications to all that above, without departing from the scope of the invention as claimed hereinbelow.

## Claims

1. A filtration apparatus (300) comprising at least one filtering septum (340, 345) and at least one device (100) for the acquisition of optical images of filtering septa (S), wherein said device (100) comprises a support frame (105) on which the following are installed:
- at least one mirror (135) with a reflective surface (140),
- at least one camera (145) having an optical axis (A) adapted to intercept said reflecting surface (140) at an angle of incidence other than a right angle, generating an inclined reflected optical axis (B) not coincident with the optical axis (A) itself, and
- at least one illuminating apparatus (150) adapted to illuminate at least one point on the reflected optical axis (B) spaced from the reflecting surface (140),
and wherein said device (100) is arranged so that the reflected optical axis (B) intersects said filtering septum (340, 345).

2. An apparatus (300) according to claim 1, wherein the reflecting surface (140) is chosen from the group consisting of: a flat reflecting surface, a concave reflecting surface and a convex reflecting surface.

3. An apparatus (300) according to any one of the preceding claims, wherein the reflecting surface (140) extends predominantly along a predetermined longitudinal direction orthogonal to the optical axis (A) of the camera (145).

4. An apparatus (300) according to any one of the preceding claims, wherein the camera (145) is chosen from the group consisting of: a matrix camera and a linear camera.

5. An apparatus (300) according to any one of the preceding claims, wherein the illuminating apparatus (150) is adapted to emit light having a wavelength comprised between 10 nm and 1 mm.

6. An apparatus (300) according to any one of the preceding claims, wherein the illuminating apparatus (150) is adapted to emit continuous or stroboscopic light.

7. An apparatus (300) according to any one of the preceding claims, wherein the illuminating apparatus (150) comprises one or more illuminators (155) positioned between the mirror (135) and the camera (145) and/or one or more illuminators (160) positioned on the opposite side of the mirror (135) with respect to the camera (145).

8. An apparatus (300) according to claim 7, wherein each illuminator (155, 160) may provide a spot light or extend predominantly in a predetermined longitudinal direction orthogonal to the optical axis (A) of the camera (145).

9. An apparatus (300) according to any one of the preceding claims, wherein the illuminating apparatus (150) comprises one or more lenses adapted to diffuse and/or focus the light generated thereby.

10. An apparatus (300) according to any one of the preceding claims, wherein the mirror (135) can be oriented on the support frame (105) by rotating about an axis of rotation (Y) orthogonal to the optical axis (A) of the camera (145).

11. An apparatus (300) according to any one of the preceding claims, wherein the camera (145) can be oriented on the support frame (105) by rotating about an axis of rotation (X) orthogonal to the optical axis (A) thereof.

12. An apparatus (300) according to claim 11, wherein a second mirror (135) having a reflecting surface (140) adapted to be intercepted by the optical axis (A) of the camera (145) at an angle of incidence different from the right angle, following a rotation of the latter about its axis of rotation (X), generating a second reflected optical axis (B') directed on the opposite side with respect to the reflected optical axis (B), is installed on the support frame,
a second illuminating unit (150) being provided to illuminate at least one point on the second reflected optical axis (B') spaced from the reflecting surface (140) of the second mirror (135).

13. An apparatus (300) according to any one of the preceding claims, wherein on the support frame (105) the following are installed:
- a second mirror (135) with a reflective surface (140),
- a second camera (145) with an optical axis (A') adapted to intercept the reflective surface (140) of the second mirror (135) at an angle of incidence different from the right angle, generating a second reflected optical axis (B') directed on the opposite side from the reflected optical axis (B),
- a second illuminating apparatus (150) adapted to illuminate at least one point on the second reflected optical axis (B') spaced from the reflecting surface (140) of the second mirror (135).

14. An apparatus (300) according to any one of the preceding claims, wherein the frame (105) is provided with panelling (110) adapted to define a closed casing containing said at least one mirror (135), said at least one camera (145) and said at least one illuminating apparatus (150),
said casing comprising at least one slit (130) positioned so as to be crossed by the reflected optical axis (B) of the camera (145) and the light generated by the illuminating apparatus (150).

15. An apparatus (300) according to claim 14, wherein said slit (130) is closed by at least one protective glass pane (165).

16. An apparatus (300) according to claim 15, wherein said protective glass pane (165) is substantially orthogonal to the reflected optical axis (B).

17. An apparatus (300) according to claim 15, wherein said slit (130) is closed by one or more further protective glass panes (165), each of which is substantially orthogonal to an emission axis of the light generated by the illuminating apparatus (150).

18. An apparatus (300) according to any one of the preceding claims, comprising movement members (600) adapted to move said device (100) along a translation direction parallel to the filtering septum (340, 345).

19. An apparatus (300) according to any one of the preceding claims, comprising a plurality of devices (100) side-by-side along a direction perpendicular to the optical axes (A) of the respective cameras (145).

20. An apparatus (300) according to any one of the preceding claims, comprising:
- a plurality of filtration chambers (355) aligned along a predetermined longitudinal direction (D), each of which is delimited by two mutually facing filtering septa (340, 345) interposed between a pair of containment plates (305),
- a movement apparatus adapted to move each pair of containment plates (305) along said longitudinal direction (D), between a closed configuration, in which the containment plates (305) are clamped into a pack on the respective filtering septa (340, 345) closing the filtration chamber (355), and an open configuration, in which the containment plates (305) are spaced apart so as to separate the respective filtering septa (340, 345) laterally opening the filtration chamber (355),
- an inlet hydraulic circuit adapted to feed a liquid to be filtered inside each filtration chamber (355), when all the pairs of containment plates (305) are in the closed configuration, and
- an outlet hydraulic circuit adapted to discharge the filtered liquid leaving each filtration chamber (355) through the respective filtering septa (340, 345), when all the pairs of containment plates (305) are in the closed configuration,
wherein said at least one device (100) is adapted to be interposed between each pair of containment plates (305) in the open configuration.

21. An apparatus (300) according to claim 20, comprising:
- a trolley (605) adapted to move along said longitudinal direction (D) with respect to the containment plates (305), and
- a bar (645) installed on the trolley (605) and movable relative thereto in a transverse direction with respect to the longitudinal direction (D), in order to slide between the filtering septa (340, 345) interposed between each pair of containment plates (305) in the open configuration,
wherein said at least one device (100) is installed on said bar (645).

## Patentansprüche

1. Filtergerät (300), umfassend mindestens ein Filterseptum (340, 345) und mindestens eine Vorrichtung (100) zum Erfassen optischer Bilder von Filtersepta (S), wobei die Vorrichtung (100) einen Tragrahmen (105) umfasst, an dem das Folgende installiert ist:
- mindestens ein Spiegel (135) mit einer reflektierenden Oberfläche (140),
- mindestens eine Kamera (145), die eine optische Achse (A) aufweist, die angepasst ist, um in einem anderen Einfallswinkel als einem rechten Winkel auf die reflektierende Oberfläche (140) aufzutreffen, wodurch eine geneigte reflektierte optische Achse (B) generiert wird, die nicht mit der optischen Achse (A) an sich zusammenfällt, und
- mindestens ein Beleuchtungsgerät (150), das angepasst ist, um mindestens einen Punkt auf der reflektierten optischen Achse (B) zu beleuchten, der von der reflektierenden Oberfläche (140) beabstandet ist,
wobei die Vorrichtung (100) angeordnet ist, sodass die reflektierte optische Achse (B) das Filterseptum (340, 345) schneidet.

2. Gerät (300) nach Anspruch 1, wobei die reflektierende Oberfläche (140) ausgewählt ist aus der Gruppe, bestehend aus: einer flachen reflektierenden Oberfläche, einer konkaven reflektierenden Oberfläche und einer konvexen reflektierenden Oberfläche.

3. Gerät (300) nach einem der vorherigen Ansprüche, wobei sich die reflektierende Oberfläche (140) überwiegend entlang einer vorbestimmten Längsrichtung orthogonal zu der optischen Achse (A) der Kamera (145) erstreckt.

4. Gerät (300) nach einem der vorherigen Ansprüche, wobei die Kamera (145) ausgewählt ist aus der Gruppe, bestehend aus: einer Matrixkamera und einer linearen Kamera.

5. Gerät (300) nach einem der vorherigen Ansprüche, wobei das Beleuchtungsgerät (150) angepasst ist, um Licht zu emittieren, das eine Wellenlänge zwischen 10 nm und 1 mm aufweist.

6. Gerät (300) nach einem der vorherigen Ansprüche, wobei das Beleuchtungsgerät (150) angepasst ist, um kontinuierliches oder stroboskopisches Licht zu emittieren.

7. Gerät (300) nach einem der vorherigen Ansprüche, wobei das Beleuchtungsgerät (150) eine oder mehrere Beleuchtungseinheiten (155), die zwischen dem Spiegel (135) und der Kamera (145) positioniert sind, und/oder eine oder mehrere Beleuchtungseinheiten (160), die auf der gegenüberliegenden Seite des Spiegels (135) in Bezug auf die Kamera (145) positioniert sind, umfasst.

8. Gerät (300) nach Anspruch 7, wobei jede Beleuchtungseinheit (155, 160) ein punktförmiges Licht bereitstellen oder sich überwiegend in einer vorbestimmten Längsrichtung orthogonal zu der optischen Achse (A) der Kamera (145) erstrecken kann.

9. Gerät (300) nach einem der vorherigen Ansprüche, wobei das Beleuchtungsgerät (150) eine oder mehrere Linsen umfasst, die angepasst sind, um das dadurch generierte Licht zu streuen und/oder zu bündeln.

10. Gerät (300) nach einem der vorherigen Ansprüche, wobei der Spiegel (135) durch Drehen um eine zu der optischen Achse (A) der Kamera (145) orthogonale Drehachse (Y) an dem Tragrahmen (105) ausgerichtet werden kann.

11. Gerät (300) nach einem der vorherigen Ansprüche, wobei die Kamera (145) durch Drehen um eine zu der optischen Achse (A) davon orthogonale Drehachse (X) an dem Tragrahmen (105) ausgerichtet werden kann.

12. Gerät (300) nach Anspruch 11, wobei ein zweiter Spiegel (135), der eine reflektierende Oberfläche (140) aufweist, die angepasst ist, um von der optischen Achse (A) der Kamera (145) unter einem von dem rechten Winkel abweichenden Einfallswinkel nach einer Drehung der letzteren um ihre Drehachse (X) getroffen zu werden, wodurch eine zweite reflektierte optische Achse (B') generiert wird, die in Bezug auf die reflektierte optische Achse (B) in die entgegengesetzte Richtung gerichtet ist, an dem Tragrahmen installiert ist,
wobei eine zweite Beleuchtungseinheit (150) bereitgestellt ist, um mindestens einen Punkt auf der zweiten reflektierten optischen Achse (B') zu beleuchten, der von der reflektierenden Oberfläche (140) des zweiten Spiegels (135) beabstandet ist.

13. Gerät (300) nach einem der vorherigen Ansprüche, wobei an dem Tragrahmen (105) das Folgende installiert ist:
- ein zweiter Spiegel (135) mit einer reflektierenden Oberfläche (140),
- eine zweite Kamera (145) mit einer optischen Achse (A'), die angepasst ist, um unter einem von dem rechten Winkel abweichenden Einfallswinkel auf die reflektierende Oberfläche (140) des zweiten Spiegels (135) aufzutreffen, wodurch eine zweite reflektierte optische Achse (B') generiert wird, die in die entgegengesetzte Richtung zu der reflektierten optischen Achse (B) gerichtet ist,
- ein zweites Beleuchtungsgerät (150), das angepasst ist, um mindestens einen Punkt auf der zweiten reflektierten optischen Achse (B') zu beleuchten, der von der reflektierenden Oberfläche (140) des zweiten Spiegels (135) beabstandet ist.

14. Gerät (300) nach einem der vorherigen Ansprüche, wobei der Rahmen (105) mit einer Verkleidung (110) versehen ist, die angepasst ist, um ein geschlossenes Gehäuse zu definieren, das den mindestens einen Spiegel (135), die mindestens eine Kamera (145) und das mindestens eine Beleuchtungsgerät (150) enthält,
das Gehäuse umfassend mindestens einen Schlitz (130), der positioniert ist, um von der reflektierten optischen Achse (B) der Kamera (145) und dem Licht, das von dem Beleuchtungsgerät (150) generiert wird, durchquert zu werden.

15. Gerät (300) nach Anspruch 14, wobei der Schlitz (130) durch mindestens eine Schutzglasscheibe (165) verschlossen ist.

16. Gerät (300) nach Anspruch 15, wobei die Schutzglasscheibe (165) im Wesentlichen orthogonal zu der reflektierten optischen Achse (B) ist.

17. Gerät (300) nach Anspruch 15, wobei der genannte Schlitz (130) durch eine oder mehrere weitere Schutzglasscheiben (165) verschlossen ist, wovon jede im Wesentlichen orthogonal zu einer Emissionsachse des Lichts ist, das durch das Beleuchtungsgerät (150) generiert wird.

18. Gerät (300) nach einem der vorherigen Ansprüche, umfassend Bewegungselemente (600), die angepasst sind, um die Vorrichtung (100) entlang einer Translationsrichtung parallel zu dem Filterseptum (340, 345) zu bewegen.

19. Gerät (300) nach einem der vorherigen Ansprüche, umfassend eine Vielzahl von Vorrichtungen (100) nebeneinander in einer Richtung orthogonal zu den optischen Achsen (A) der jeweiligen Kameras (145).

20. Gerät (300) nach einem der vorherigen Ansprüche, umfassend:
- eine Vielzahl von Filtrationskammern (355), die entlang einer vorbestimmten Längsrichtung (D) ausgerichtet sind, wovon jede durch zwei einander zugewandte Filtersepta (340, 345) begrenzt ist, die zwischen ein Paar von Rückhalteplatten (305) eingefügt sind,
- ein Bewegungsgerät, das angepasst ist, um jedes Paar von Rückhalteplatten (305) entlang der Längsrichtung (D) zwischen einer geschlossenen Konfiguration, in der die Rückhalteplatten (305) in einem Paket auf den jeweiligen Filtersepta (340, 345) festgeklemmt sind, die die Filtrationskammer (355) verschließen, und einer offenen Konfiguration, in der die Rückhalteplatten (305) voneinander beabstandet sind, um die jeweiligen Filtersepta (340, 345) zu trennen und die Filtrationskammer (355) seitlich zu öffnen, zu bewegen,
- einen Einlasshydraulikkreislauf, der angepasst ist, um eine zu filternde Flüssigkeit in jede Filtrationskammer (355) zu leiten, wenn alle Paare von Rückhalteplatten (305) in der geschlossenen Konfiguration sind, und
- einen Auslasshydraulikkreislauf, der angepasst ist, um die gefilterte Flüssigkeit, die jede Filtrationskammer (355) verlässt, durch die jeweiligen Filtersepta (340, 345) abzuleiten, wenn alle Paare von Rückhalteplatten (305) in der geschlossenen Konfiguration sind, wobei die mindestens eine Vorrichtung (100) angepasst ist, um in der offenen Konfiguration zwischen jedes Paar von Begrenzungsplatten (305) eingefügt zu sein.

21. Gerät (300) nach Anspruch 20, umfassend:
- einen Wagen (605), der angepasst ist, um sich in der genannten Längsrichtung (D) in Bezug auf die Begrenzungsplatten (305) zu bewegen, und
- eine Stange (645), die auf dem Wagen (605) installiert und in Bezug auf diesen in einer Querrichtung in Bezug auf die Längsrichtung (D) beweglich ist, um zwischen den Filtersepta (340, 345) zu gleiten, die in der offenen Konfiguration zwischen jedem Paar von Begrenzungsplatten (305) eingefügt sind,
wobei die mindestens eine Vorrichtung (100) an der Stange (645) installiert ist.

## Revendications

1. Appareil de filtration (300) comprenant au moins un septum filtrant (340, 345) et au moins un dispositif (100) destiné à l'acquisition d'images optiques de septa filtrants (S), dans lequel ledit dispositif (100) comprend un cadre de support (105) sur lequel sont installés :
- au moins un miroir (135) équipé d'une surface réfléchissante (140),
- au moins une caméra (145) dont l'axe optique (A) est conçu pour intercepter ladite surface réfléchissante (140) sous un angle d'incidence différent d'un angle droit, générant ainsi un axe optique réfléchi incliné (B) qui ne coïncide pas avec l'axe optique (A) lui-même, et
- au moins un dispositif d'éclairage (150) destiné à éclairer au moins un point situé sur l'axe optique réfléchi (B) et espacé de la surface réfléchissante (140),
et dans lequel ledit dispositif (100) est disposé de telle sorte que l'axe optique réfléchi (B) coupe ledit septum filtrant (340, 345).

2. Appareil (300) selon la revendication 1, dans lequel la surface réfléchissante (140) est choisie parmi le groupe comprenant : une surface réfléchissante plane, une surface réfléchissante concave et une surface réfléchissante convexe.

3. Appareil (300) selon l'une quelconque des revendications précédentes, dans lequel la surface réfléchissante (140) s'étend principalement le long d'une direction longitudinale prédéterminée orthogonale à l'axe optique (A) de la caméra (145).

4. Appareil (300) selon l'une quelconque des revendications précédentes, dans lequel la caméra (145) est choisie parmi le groupe constitué : d'une caméra matricielle et d'une caméra linéaire.

5. Appareil (300) selon l'une quelconque des revendications précédentes, dans lequel le dispositif d'éclairage (150) est adapté pour émettre une lumière dont la longueur d'onde est comprise entre 10 nm et 1 mm.

6. Appareil (300) selon l'une quelconque des revendications précédentes, dans lequel le dispositif d'éclairage (150) est adapté pour émettre une lumière continue ou stroboscopique.

7. Appareil (300) selon l'une quelconque des revendications précédentes, dans lequel le dispositif d'éclairage (150) comprend un ou plusieurs moyens d'éclairage (155) placés entre le miroir (135) et la caméra (145) et/ou un ou plusieurs moyens d'éclairage (160) placés du côté opposé au miroir (135) par rapport à la caméra (145).

8. Appareil (300) selon la revendication 7, dans lequel chaque moyen d'éclairage (155, 160) peut produire un faisceau ponctuel ou s'étendre principalement dans une direction longitudinale prédéterminée orthogonale à l'axe optique (A) de la caméra (145).

9. Appareil (300) selon l'une quelconque des revendications précédentes, dans lequel le dispositif d'éclairage (150) comprend une ou plusieurs lentilles adaptées pour diffuser et/ou focaliser la lumière qu'il génère.

10. Appareil (300) selon l'une quelconque des revendications précédentes, dans lequel le miroir (135) peut être orienté sur le cadre de support (105) par rotation autour d'un axe de rotation (Y) orthogonal à l'axe optique (A) de la caméra (145).

11. Appareil (300) selon l'une quelconque des revendications précédentes, dans lequel la caméra (145) peut être orientée sur le cadre de support (105) par rotation autour d'un axe de rotation (X) orthogonal à son axe optique (A).

12. Appareil (300) selon la revendication 11, dans lequel un deuxième miroir (135) équipé d'une surface réfléchissante (140) adaptée pour être interceptée par l'axe optique (A) de la caméra (145) sous un angle d'incidence différent de l'angle droit, à la suite d'une rotation de cette dernière autour de son axe de rotation (X), générant un deuxième axe optique réfléchi (B') dirigé du côté opposé par rapport à l'axe optique réfléchi (B), est installé sur le châssis de support,
une deuxième unité d'éclairage (150) étant prévue pour éclairer au moins un point situé sur le deuxième axe optique réfléchi (B'), à une certaine distance de la surface réfléchissante (140) du deuxième miroir (135).

13. Appareil (300) selon l'une quelconque des revendications précédentes, dans lequel les éléments suivants sont installés sur le cadre de support (105) :
- un deuxième miroir (135) équipé d'une surface réfléchissante (140),
- une deuxième caméra (145) dont l'axe optique (A') est adapté pour intercepter la surface réfléchissante (140) du deuxième miroir (135) selon un angle d'incidence différent de l'angle droit, générant ainsi un deuxième axe optique réfléchi (B') dirigé dans la direction opposée à celle de l'axe optique réfléchi (B),
- un deuxième appareil d'éclairage (150) adapté pour éclairer au moins un point situé sur le deuxième axe optique réfléchi (B'), à une certaine distance de la surface réfléchissante (140) du deuxième miroir (135).

14. Appareil (300) selon l'une quelconque des revendications précédentes, dans lequel le cadre de support (105) est muni d'un habillage (110) adapté pour définir un boîtier fermé contenant ledit au moins un miroir (135), ladite au moins une caméra (145) et ledit au moins un dispositif d'éclairage (150),
ledit boîtier comportant au moins une fente (130) disposée de manière à être traversée par l'axe optique réfléchi (B) de la caméra (145) et par la lumière générée par le dispositif d'éclairage (150).

15. Appareil (300) selon la revendication 14, dans lequel ladite fente (130) est obturée par au moins une vitre de protection (165).

16. Appareil (300) selon la revendication 15, dans lequel ledit panneau de vitre de protection (165) est sensiblement orthogonal à l'axe optique réfléchi (B).

17. Appareil (300) selon la revendication 15, dans lequel ladite fente (130) est fermée par un ou plusieurs autres panneaux de vitre de protection (165), chacun d'entre eux étant sensiblement orthogonal à un axe d'émission de la lumière générée par le dispositif d'éclairage (150).

18. Appareil (300) selon l'une quelconque des revendications précédentes, comprenant des éléments de déplacement (600) adaptés pour déplacer ledit dispositif (100) le long d'une direction de translation parallèle au septum filtrant (340, 345).

19. Appareil (300) selon l'une quelconque des revendications précédentes, comprenant une pluralité de dispositifs (100) disposés côte à côte selon une direction perpendiculaire aux axes optiques (A) des caméras respectives (145).

20. Appareil (300) selon l'une quelconque des revendications précédentes, comprenant :
- une pluralité de chambres de filtration (355) alignées le long d'une direction longitudinale prédéterminée (D), chacune d'entre elles étant délimitée par deux septa filtrants (340, 345) se faisant face, intercalés entre une paire de plaques de confinement (305),
- un appareil de déplacement adapté pour déplacer chaque paire de plaques de confinement (305) le long de ladite direction longitudinale (D), entre une configuration fermée, dans laquelle les plaques de confinement (305) sont serrées en un ensemble sur les septa filtrants respectifs (340, 345) fermant la chambre de filtration (355), et une configuration ouverte, dans laquelle les plaques de confinement (305) sont espacées les unes des autres de manière à séparer les septa filtrants respectifs (340, 345), ouvrant ainsi latéralement la chambre de filtration (355),
- un circuit hydraulique d'admission destiné à acheminer un liquide à filtrer à l'intérieur de chaque chambre de filtration (355), lorsque toutes les paires de plaques de confinement (305) sont en position fermée, et
- un circuit hydraulique de sortie adapté pour évacuer le liquide filtré sortant de chaque chambre de filtration (355) à travers les septa filtrants respectifs (340, 345), lorsque toutes les paires de plaques de confinement (305) sont en position fermée,
dans lequel ledit au moins un dispositif (100) est conçu pour être intercalé entre chaque paire de plaques de confinement (305) dans la configuration ouverte.

21. Appareil (300) selon la revendication 20, comprenant :
- un chariot (605) adapté pour se déplacer selon ladite direction longitudinale (D) par rapport aux plaques de confinement (305), et
- une barre (645) montée sur le chariot (605) et mobile par rapport à celui-ci dans une direction transversale par rapport la direction longitudinale (D), afin de coulisser entre les septa filtrants (340, 345) intercalés entre chaque paire de plaques de confinement (305) en configuration ouverte,
dans lequel ledit au moins un dispositif (100) est installé sur ladite barre (645).
